# EUROPEAN PATENT SPECIFICATION

(11) **EP 1 223 649 B1**
(45) Date of publication and mention of the grant of the patent: **11.01.2012**
(21) Application number: 01500294.2
(22) Date of filing: 27.12.2001
(51) Int. Cl.: H02G 3/04

(54) **Internal wall for a raceway for electric wires**
Innenwand für einen Kanal für elektrische Drähte
Paroi interne pour une conduite pour fils électriques

(30) Priority: 11.01.2001 ES 200100053 U
(43) Date of publication of application: 17.07.2002
(73) Proprietor: Aparellaje Electrico S.L., 08903-L'Hospitalet De Llobregat (Barcelona) (ES)
(72) Inventor: Benito Navazo, Juan Manuel, 08290 Sant Cugat del Valles (Barcelona) (ES)
(74) Representative: Curell Aguilà, Mireia

(56) References cited:
- EP-A- 0 957 552
- US-A- 5 299 947

## Description

### Field of the Invention

The present invention relates to an internal wall for a raceway for electric wires, to be precise to a longitudinal compartmentalization wall for a raceway for electric wires of the type constituted by a base section and a removable cover section, engageable with the aforementioned base section, both made from synthetic plastic insulating material.

### Prior Art

When mounting electrical installations with the said raceways compartmentalized by one, two or more internal walls, it frequently happens that if one compartment is used only for mounting electrical mechanisms, such as power outlets, and the remaining compartments are used for locating electrical conductors, the need arises for some cables in a particular remaining compartment to be diverted into the said one compartment, whereby on-the-spot solutions have to be adopted, such as opening a gap or a window in the internal wall, which, in many cases is little less than impossible, especially in the case of installations which are in service.

Another case where this need arises is when it is wanted to make a derivation in "T" of a raceway and wires have to be routed from the compartment farthest removed from the "T."

As is understood, it would be desirable to arrange the raceways in question so that the internal longitudinal compartmentalization walls thereof were provided with means that allowed for communication from one compartment to the adjacent ones, in the same way as with the external walls of the raceways used for electrical panels.

EP09575521A1 discloses a box for housing electrical devices such as switches and sockets. The box is formed by a U-shaped profile defining a holding chamber for said devices and comprises transversal walls which can be fitted to said U-shaped profile at different points along its length to compartmentalize the holding chamber in the longitudinal direction. These transversal walls are provided with through holes to allow electrical conductors to pass. In some embodiments the box is extended by an outer longitudinal channel which is separated from the main channel of the box by the actual longitudinal wall of said main channel which, in this case, is also provided with through holes to allow electrical conductors to pass.

US5299947 discloses a raceway defining multiple compartments where electrical devices can be mounted. The raceway includes longitudinal compartmentalization walls provided with through holes to allow electrical conductors to pass.

### Summary of the invention

In order to fulfil the foregoing premise, the solution has been adopted of forming in the intermediate walls of the raceways in question spaced apart arrangements that easily allow the wires to pass from one compartment to the adjacent one at points close to the point where the need arises.

In accordance with the foregoing solution, the internal wall according to claim 1 has been developed.

Certain features consist of the transfer areas being constituted by closed figures defined by lines of weakening and that such figures of the transfer areas comprise die-cut lines and at least one line of weakening and/or folding or, simply, die-cut defining through openings, that is to say, openings sufficiently large such as to allow the electric wires to pass therethrough. These openings may be provided with removable stopping means.

On the other hand, the invention contemplates that the intermediate wall is fixedly attached to the base section, or may be removably engageable therewith.

### Brief Description of the Drawings

To facilitate the understanding of the foregoing ideas, the object of the invention is described hereinafter, with reference to the accompanying illustrative drawings, in which:
Figure 1 is a perspective view of aligned fragments of an internal compartmentalization wall of the base section for a raceway for electric conductors.
Figure 2 is a cross section view along the line II-II of Figure 1.
Figure 3 is a plan view of a central portion of a base section of a raceway wherein an electrical apparatus installed in one compartment is connected to an electrical conductor coming from another compartment.

### Detailed Description of the invention

In the drawings there is shown alone and fragmentarily the base section 1 of a raceway for electric wires provided with an internal wall 2 that separates two compartments 3a and 3b of said raceway.

According to the invention, said internal wall 2 is provided with transfer areas 4 spaced apart at a distance of about twelve centimetres and susceptible of placing two adjacent compartments 3a and 3b in communication with each other, defining openings 5 of sufficient section to allow the electric wires 6 to pass from one of said compartments 3a or 3b to the other.

The transfer areas 4 are formed by closed figures defined by lines of weakening or folding 7 and/or die-cut lines 8.

In the case shown in the drawings, the transfer areas 4 are formed by three die-cut extents 8 and a lower extent that can be folded over simply or with the aid of a line of weakening or perforated line 7.

The line of weakening 7 can be continuous along the base of the internal wall or be marked in each transfer area 4 at the time of producing the die-cut lines 8.

As may be seen in the Figures, when the openings 5 are made, the transfer areas 4 define tongues 9 that extend into one or the other of the compartments 3a and 3b.

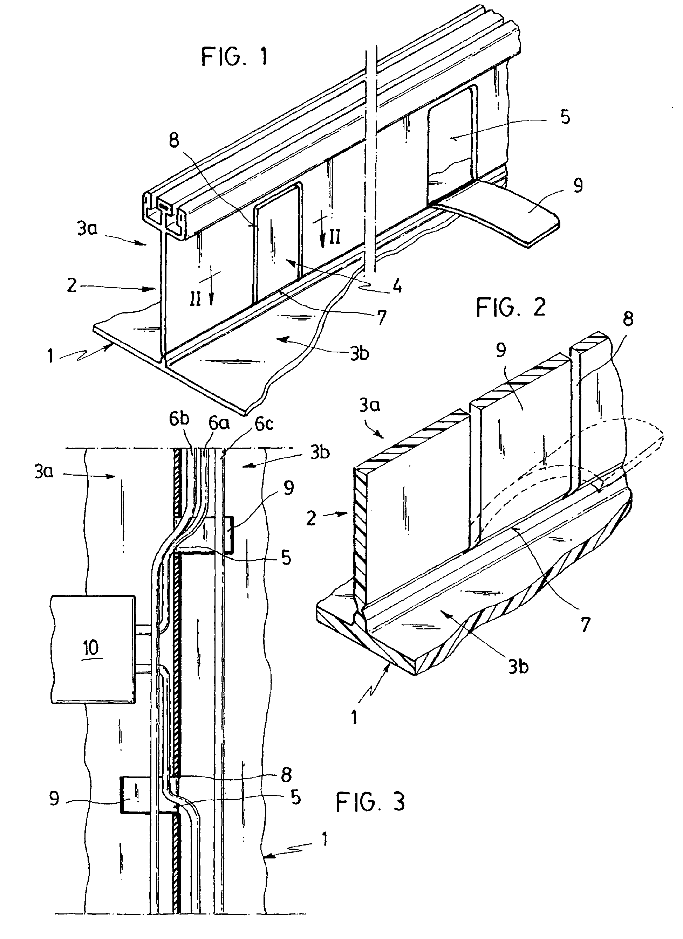

Figure 3 shows how one electrical wire 6a supplies an electrical apparatus 10, passing from compartment 3b to compartment 3a and returning to the former, at the same time as an electrical wire 6b passes from compartment 3b to 3a and another electrical wire 6c remains in compartment 3b.

## Claims

1. An internal longitudinal compartmentalization wall for a raceway for electrical lines, provided with spaced apart transfer areas (4) susceptible of placing two adjacent compartments (3a, 3b) in communication with each other, determining openings (5) to allow the electrical wires (6) to pass from one to another of adjacent compartments (3a, 3b), **characterized in that** said transfer areas (4) are formed by closed figures defined by die-cut lines (8) and by at least one weakening line or one line of folding (7), so that said transfer areas (4) define tongues (9) that, by folding over said weakening line or line of folding (7), extend into one or the other of said compartments (3a, 3b).

2. The internal longitudinal compartmentalization wall (2) according to claim 1, **characterized in that** it is integral with the base section (1) of a raceway.

## Patentansprüche

1. Interne Wand zur Bereichsbildung in Längsrichtung für einen Kanal für elektrische Leitungen, die mit in einem Abstand zueinander angeordneten Übergangsflächen (4) versehen ist, die dazu in der Lage sind, zwei benachbarte Bereiche (3a, 3b) in Kommunikation zueinander zu setzen, und Öffnungen (5) dazu bestimmen, elektrische Kabel (6) von einem zu einem anderen der benachbarten Bereiche (3a, 3b) verlaufen zu lassen, **gekennzeichnet dadurch, dass** die Übergangsflächen (4) durch geschlossene Umrisse gebildet werden, die durch gestanzte Linien (8) und durch mindestens eine Schwächungslinie oder eine Faltlinie (7) definiert sind, so dass die Übergangsflächen (4) Zungen (9) definieren, die durch Falten über die Schwächungslinie oder Faltlinie (7) in den einen oder den anderen der Bereiche (3a, 3b) verlaufen.

2. Interne Wand (2) zur Bereichsbildung in Längsrichtung nach Anspruch 1, **gekennzeichnet dadurch, dass** sie einstückig mit dem Grundabschnitt (1) eines Kanals ausgebildet ist.

## Revendications

1. Paroi de compartimentalisation longitudinale interne pour une conduite pour fils électriques, pourvue de zones de transfert séparées (4) susceptibles de placer deux compartiments adjacents (3a, 3b) en communication l'un avec l'autre, déterminant des ouvertures (5) pour permettre aux fils électriques (6) de passer d'un à un des autres compartiments adjacents (3a, 3b), **caractérisée en ce que** lesdites zones de transfert (4) sont formées par des figures fermées définies par des lignes de prédécoupe (8) et au moins une ligne d'affaiblissement ou une ligne de pliage (7), de sorte que lesdites zones de transfert (4) définissent des languettes (9) qui, par pliage sur ladite ligne d'affaiblissement ou ligne de pliage (7), s'étendent dans l'un ou l'autre desdits compartiments (3a, 3b).

2. Paroi de compartimentalisation longitudinale interne (2) selon la revendication 1, **caractérisée en ce qu'**elle est d'une seule pièce avec la section de base (1) d'une conduite.
